# EUROPEAN PATENT SPECIFICATION

(11) **EP 0 848 879 B1**
(45) Date of publication and mention of the grant of the patent: **10.03.2004**
(21) Application number: 96927423.2
(22) Date of filing: 15.08.1996
(51) Int. Cl.: H04M 3/50, H04L 12/58

(54) **PHONE BASED DYNAMIC IMAGE ANNOTATION**
AUF EINEM TELEFON BASIERENDE DYNAMISCHE BILDAUFZEICHNUNG
ANNOTATION D'IMAGE DYNAMIQUE AU MOYEN DE LA TELEPHONIE

(30) Priority: 06.09.1995 US 523835
(43) Date of publication of application: 24.06.1998
(73) Proprietor: SIEMENS CORPORATE RESEARCH, INC., Princeton, New Jersey 08540 (US); Siemens Information and Communication Networks, Inc., Boka Raton, Florida 33487 (US)
(72) Inventor: PIZANO, Arturo, Belle Mead, NJ 08502 (US); WU, Solomon, Milpitas, CA 95035 (US); CHIU, Ming-Yee, Princeton, NJ 08550 (US)
(74) Representative: Litchfield, Laura Marie
(86) International application number: PCT/US1996/013217
(87) International publication number: WO 1997/011549

(56) References cited:
- EP-A- 0 686 909
- WO-A-92/14314
- GB-A- 2 150 326
- HITACHI REVIEW, vol. 44, no. 4, August 1995, TOKYO JP, pages 207-212, XP000550271 TOSHIAKI KOYAMA ET AL: "PERSONAL MULTIMEDIA COMMUNICATION SYSTEMS"
- 2ND IEEE CONFERENCE ON COMPUTER WORKSTATIONS, 7 - 10 March 1988, SANTA CLARA(US), pages 160-168, XP000617541 POLLE T. ZELLWEGER: "AN OVERVIEW OF THE ETHERPHONE SYSTEM AND ITS APPLICATIONS"
- PATENT ABSTRACTS OF JAPAN vol. 13, no. 476 (E-837), 16 October 1989 & JP,A,01 188065 (NEC CORP), 27 July 1989,
- PATENT ABSTRACTS OF JAPAN vol. 18, no. 560 (E-1621), 26 October 1994 & JP,A,06 205150 (RICOH CO LTD), 22 July 1994,

## Description

### Background of the Invention

### Field of the Invention

The present invention relates to the storage and retrieval of multimedia messages and more particularly to utilizing the store and forward capabilities of a voice mail system for multimedia messages containing dynamically annotated images.

### Description of the Prior Art

The availability of hardware and software to generate, store and distribute digital media (text, voice, images, video, graphics, etc....) has enabled the development of multimedia messaging systems that give people the ability to communicate without having to be in the same place at the same time. In order for these systems to be effective, they must provide the means to convey as much information as possible in a simple and intuitive way. Within this context, the concept of image annotation which involves the ability to superimpose voice, text, graphics and mouse movements on a previously recorded image is appealing because it lets the sender act as if the receiver were present. For example, a person could verbally and graphically describe the way in which a document could be changed as if the other person was standing next to him/her. In general, dynamic image annotation extends the way in which people can use computers to communicate.

The use of annotation to enhance computer-based communication has been available in various forms. In its simplest way, text documents can be extended with special markers that resemble "post-it" notes where a person could add typewritten comments. More sophisticated systems enable the creation of annotations on images or documents that include sound and graphics. However, in these it is assumed that the computers where the annotations are generated and played back possess the necessary hardware/software to perform audio recording and playback.

W092/14314 discloses a communication network consisting of a digital communication network and a separate audio network, and enables an audio icon to be inserted into the text of a document indicating the position of voice or other audio information. When text, data, image or video portions are displayed on a screen, and where the audio icon appears, the voice insertion is controllably replayed over the audio network.

The article "Personal Multimedia Communication Systems" by T. Koyama et al pp207-212 Hitachi Review Vol 44 (1995) No. 4 refers to computers having multimedia capacity, and in particular to computers having the facility to record and replay audio information.

It is an object of the present invention to develop a unique annotation that can be used in environments where the computers used to compose and play back the annotation lack audio capabilities, but where a separate telephone device is available. The basic idea is to use the computer to record graphics and mouse movements (gestures) and a voice mail device to record the voice component of the message.

According to one aspect of the invention, there is provided a phone based dynamic image annotation system, as set out in claims 1, 2 and 3.

According to a further aspect of the invention, there is provided a method of transferring dynamically annotated images as claimed in one of claims 8 and 9.

The present invention extends the use of dynamic image annotation to PCs or workstations lacking full multimedia capabilities. The system enables the composition, storage and retrieval of multimedia messages containing dynamically annotated images by utilizing the store and forward capabilities of a voice mail system and a telephone device to carry the voice/sound portion of the message. The system includes protocols used to maintain the synchronization of the voice/sound components of the message during recording, storage and playback.

For a better understanding of the present invention, and to show how it may be brought into effect, reference will now be made, by way of example, to the accompanying drawings, in which:
Figure 1 illustrates four potential multimedia scenarios.
Figure 2 illustrates the record protocol of one embodiment of the present invention.
Figure 3 illustrates the playback protocol of one embodiment of the present invention.
Figure 4 illustrates system components of a test of the present invention.

### Detailed Description of the Invention

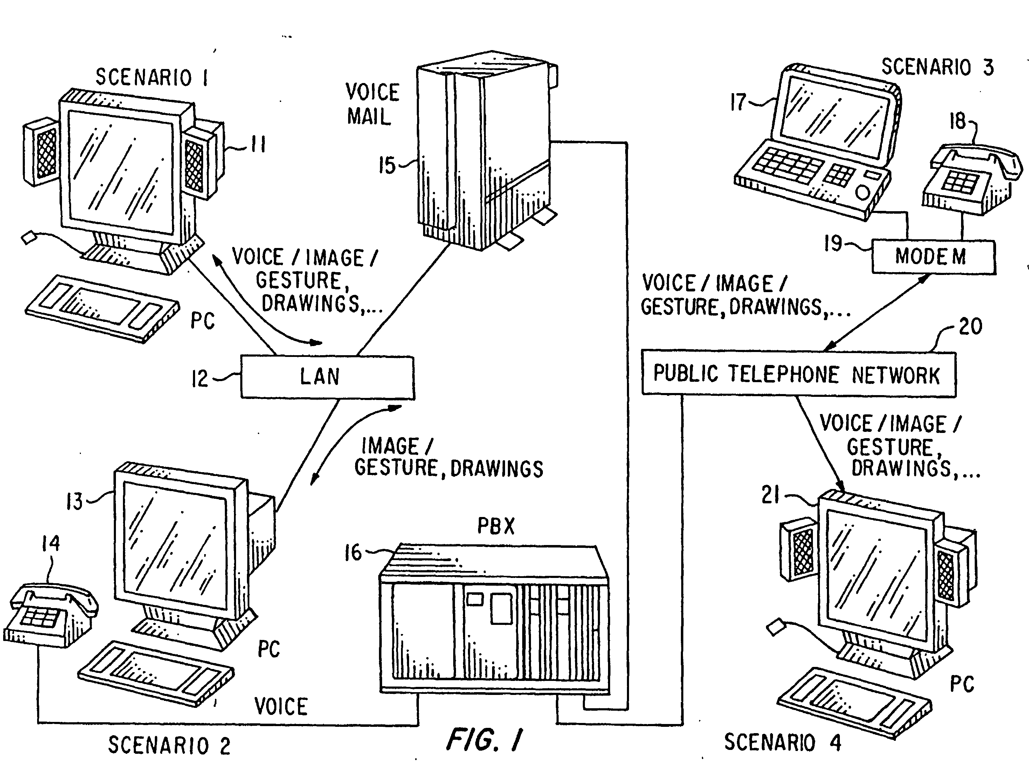

Figure 1 illustrates four scenarios in which the dynamic annotation of the present invention can be used within a voice mail environment. In scenario 1 a user with a multimedia PC 11 accesses the voice mail system 15, including dynamic image annotation, through a local area network 12. In scenario 2 a user with a non-multimedia PC 13 (i.e., a PC without speakers, microphone or telephone interface) accesses the services of the voice mail system 15 through the telephone 14 and the local area network 12. The telephone connection is achieved by means of a public branch exchange (PBX) 16. In scenario 3 a user of a portable non-multimedia PC 17 (i.e., a portable PC without speakers, microphone or telephone interface) accesses the services of the voice mail system 15 through the public telephone network 20 by means of a telephone 18 and modem 19. In scenario 4 a user with a multimedia PC 21 accesses the services of the voice mail system 15 remotely via the telephone network 20.

Of particular interest to the present invention are scenarios 2 and 3 which require the availability of a telephone device. More specifically, in scenario 2, the voice component or the annotated message is carried over the voice network while the graphics and gestures travel simultaneously over the local area network. In scenario 3, the voice component of the annotated message is again delivered to the voice mail system over the voice network. The rest of the annotation, including the image, graphic and mouse gestures, are also delivered to the voice mail system via a separate phone line. In an alternative implementation of scenario 3, the graphics and gesture components of the annotation can be recorded in the local PC and delivered to the voice mail system over the same telephone line that carried the voice.

A typical multimedia annotated message consists of one or more images, a voice/sound message and a timed sequence of gestures consisting of drawings, mouse movements and viewing commands, all of which are synchronized in time. The objective of the present invention is to design a protocol that will enable the separation of the voice/sound component during transmission and storage and the reattachment of the voice/sound component during playback. The key problem in the development of this protocol is the identification of suitable synchronization mechanisms.

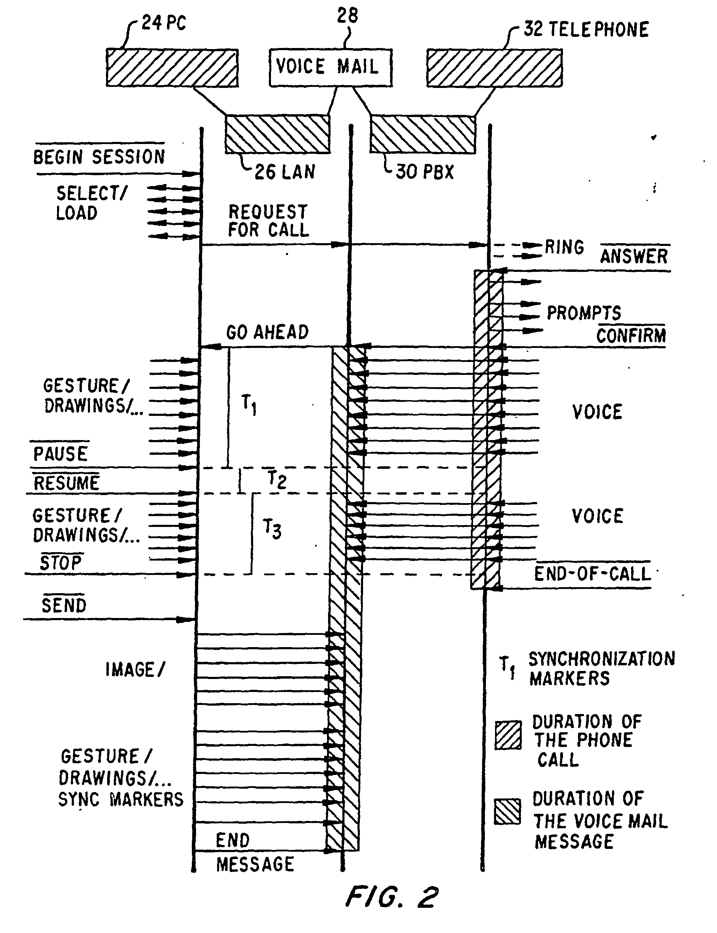

Figure 2 illustrates the recording portion of a protocol and the interconnections between the computer 24, the local area network 26, the voice mail system 28, the PBX 30 and the telephone device 32 of one embodiment of the present invention. The user begins a session by selecting the recording mode, then chooses the image(s) to be annotated. When the selection is completed the system will ask the voice mail system 28 to initiate a call to the appropriate telephone device 32 and then will enter a waiting state. It is assumed that there are mechanisms in place to determine the device to be called and to validate the user identification. The voice mail system 28 will initiate the call, wait for the user to answer and play a prompt indicating the reason for the call and asking the user to perform a specific action, e.g., push a button to confirm that he is ready to begin annotating the image(s). Upon receiving confirmation from the user, the voice mail system 28 will then instruct the annotation program on the PC 24 to go ahead with the annotation and will begin recording the voice message sent through the telephone device 32. Notice that there are real-time constraints to be satisfied in this step. More specifically, the system must be able to instantly notify the annotation program to go ahead. The program must also be able to return from the waiting state immediately. A series of synchronization marks (Ti) are recorded during this step to keep track of the duration of the session. In particular, T₁ refers to the time elapsed between the point where the annotation begins and the first pause, T₂ refers to the duration of the first pause and T₃ to the duration of the second segment of the annotation. Notice that markers T₄, T₅,... may be needed if there are two or more pauses during the recording of the annotation. The user will indicate completion of the annotation by pressing a 'STOP' button and hanging up the telephone device 32. The session will be completed (from the user's point of view) when the user issues a 'SEND' command. The system will continue its communication with the voice mail system 28 in the background, sending the image(s), gestures and synchronization markers to the message store where they will be stored with the voice portion of the message.

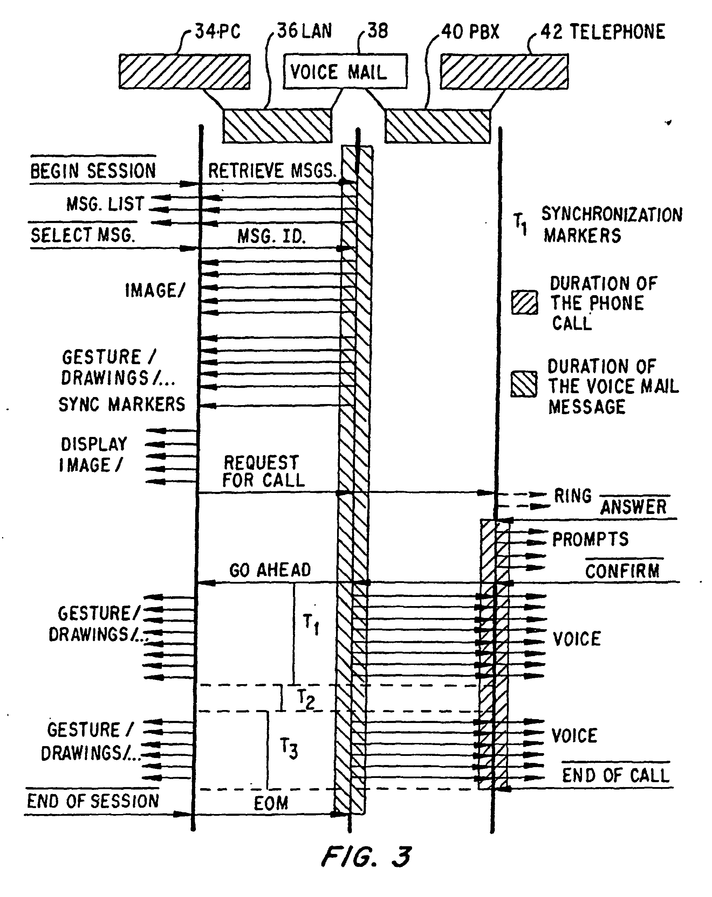

Figure 3 illustrates the steps to be performed during playback. The interconnections between the computer 34, the local area network 36, the voice mail system 38, the PBX 40 and the telephone device 42 are as shown in Figure 2. In the first step, the user receives a list of the messages available and selects one to be played back. The next two steps in the process are similar to those described in the protocol above. In the third step, the user will receive the voice message over the telephone device 42 while the gesture portion of the annotation is being displayed on the screen of the computer 34. The synchronization markers collected during the recording session will be used to coordinate the two devices. More specifically, the gesture player will periodically compare the execution and real times. If necessary the gesture player may drop small gestures to speed up the process. The gesture player may also introduce small delays to re-synchronize the voice and gesture annotation.

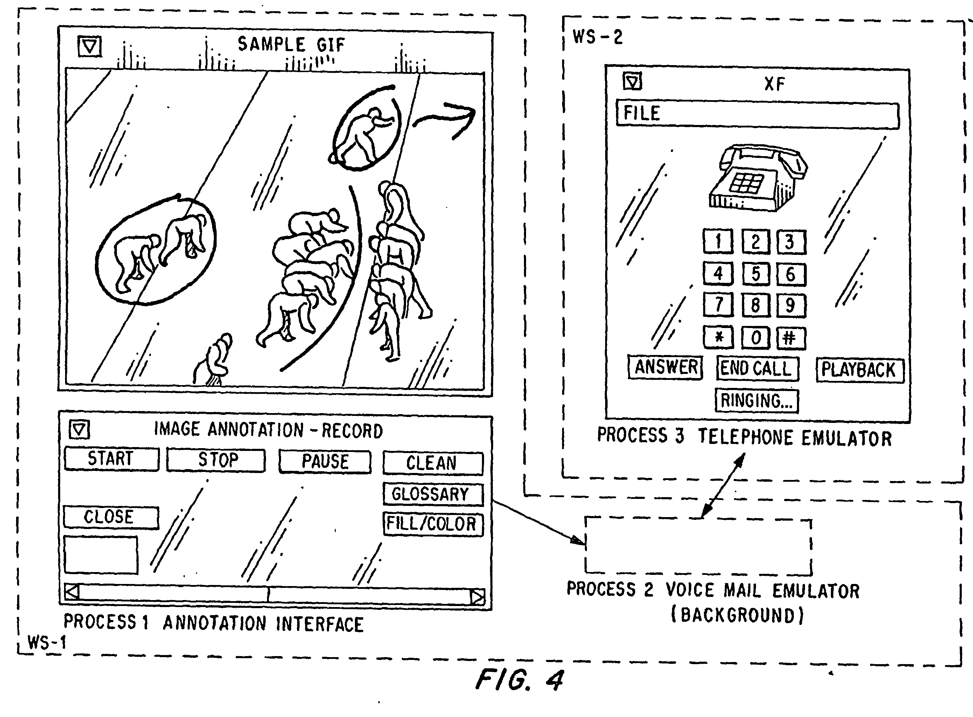

As a test of the present invention, a simple concept system was created that simulates the functionality of a telephone and voice mail components. This system is illustrated in Figure 4. The system consists of three UNIX processors running on two separate workstations. Processor 1 runs the image annotation software extended with remote procedure calls that simulate the communication that would take place with the voice mail server. Processor 2, running in the background, simulates the functionality of the voice mail system; it receives and sends commands to the annotation program (processor 1) and telephone device (processor 3) as defined in the protocols. Finally, processor 3 is used to emulate a standard telephone device. It uses a graphical user interface and the microphone and speakers of a second workstation to record and play the voice portion of the message. The above testing system shows that the desired functionality of the present invention is achievable.

As stated above, the present invention extends the use of dynamic image annotation to PCs or workstations lacking full multimedia capabilities. Additional benefits derived from the use of a telephone to transmit the voice/sound component of a multimedia message include an improvement in the quality of the sound recorded and delivered and a reduction in traffic and bandwidth requirements of the local area network.

It is not intended that the present invention be limited to the hardware or software arrangement, or operational procedures shown disclosed. This invention includes all of the alterations and variations thereto as encompassed within the scope of the claims as follows.

## Claims

1. A phone based dynamic image annotation system comprising:
computer means (24, 34), including a display, connected by a data network (26, 36) to a message store (28, 38);
telephone means (32, 42) connected by an audio network (30, 40) to the message store (28, 38); and
protocol means for recording and playing back an annotated message comprising at least an audio component and a graphics and gesture component wherein during recording and playing back of the message the voice component of the message is carried by the audio network (30, 40) and the graphics and gesture component is carried by the data network (26, 36), wherein during recording of the annotated message synchronisation marks for maintaining the synchronisation of the voice component and the graphics and gesture component of the message are recorded, and wherein during playing back the voice component played over the audio network (30, 40) is continually synchronized with a display of graphics and gesture component of said message on said display, the synchronisation of the voice component and the graphics and gesture component being achieved by the protocol means using the recorded synchronisation marks.

2. A phone based dynamic image annotation system comprising:
computer means (24, 34) including a computer screen;
a local area network (26, 36) connected to said computer means (24, 34);
a voice mail system (28, 38) connected to said local area network (26, 36);
PBX means (30, 40) connected to said voice mail system (28, 38);
telephone means (32, 42) connected to said PBX means (30, 40); and,
protocol means for recording and playing back an annotated message comprising at least an audio component and a graphics and gesture component wherein during recording and playing back of the message the voice component of the message is carried by the telephone means (32, 42) and the graphics and gesture component is carried by the local area network (26, 36), wherein during recording of the annotated message synchronisation marks for maintaining the synchronisation of the voice component and the graphics and gesture component of the message are recorded, and wherein during playing back the voice component played over the telephone means (32, 42) is continually synchronized with a display of graphics and gesture component of said message on said display, the synchronisation of the voice component and the graphics and gesture component being achieved by the protocol means using the recorded synchronisation marks.

3. A phone based dynamic image annotation system comprising:
computer means (24, 34) comprising a computer screen;
modem means (19) connected to said computer means (24, 34) ;
telephone means (18) connected to said modem means (19) ;
a public telephone network (20) connected to said modem means (19);
PBX means (16) connected to said public telephone network (20) ;
a voice mail system (15) connected to said PBX means (16) ; and,
protocol means for recording and playing back an annotated message comprising at least an audio component and a graphics and gesture component wherein during recording and playing back of the message the voice component of the message is carried by the telephone means (18) and the graphics and gesture component is carried by the modem means (19), wherein during recording of the annotated message synchronisation marks for maintaining the synchronisation of the voice component and the graphics and gesture component of the message are recorded, and wherein during playing back the voice component played over the telephone means (18) is continually synchronized with a display of graphics and gesture component of said message on said display, the synchronisation of the voice component and the graphics and gesture component being achieved by the protocol means using the recorded synchronisation marks.

4. A phone based dynamic image annotation system as claimed in claim 2 or 3 wherein said protocol means comprises:
recording means; and
playback means.

5. A phone based dynamic image annotation system as claimed in claim 4 wherein said recording means comprises:
loading means for loading said image on said computer screen;
initiate means for asking said voice mail system (15, 28, 38) to initiate a call to a device and to enter a waiting state; wherein said voice mail system (15, 28, 38) initiates said call and upon answering of said call, plays a prompt indicating reason for said call and asks user to perform a specific action;
confirmation means for providing confirmation from said user;
instruction means for having said voice mail system (15, 28, 38) instruct annotation program of said computer means to do annotation while said user begins recording a voice message through said telephone means; and
communication means for having said voice mail system (15, 28, 38) send images, gestures and synchronization markers to a message store to be stored with said voice message.

6. A phone based dynamic image annotation system as claimed in claim 4 wherein said playback means comprises:
loading means for loading said image on said computer screen;
initiate means for asking said voice mail system to initiate a call to a device and to enter a waiting state; wherein said voice mail system (15, 28, 38) initiates said call and upon answering of said call, plays a prompt indicating reason for said call and asks user to perform a specific action;
confirmation means for providing confirmation from said user;
transmission means for sending said voice messages over said telephone means while said images and gestures are displayed on screen of said computer means; and
synchronization means for using said synchronization markers for coordinating said telephone means and said screen of said computer means.

7. A phone based dynamic image annotation system as claimed in claim 6 wherein said playback means further comprises:
retrieve messages means for said computer means (24, 34) to request a list of messages from said voice mail system (15, 28, 38);
message list means for said voice mail system (15, 28, 38) to provide said list of messages;
select message means for said computer means (24, 34) to select one or more messages from said list of messages; and
transmission and display means for said voice mail system (15, 28, 38) to provide said one or more messages.

8. A method of transferring dynamically annotated images comprising the steps of:
utilizing computer means comprising a computer screen;
connecting said computer means to a local area network;
connecting a voice mail system to said local area network;
connecting PBX means to said voice mail system;
connecting telephone means to said PBX means; and,
utilizing protocol means for recording and playing back an annotated message comprising at least an audio component and a graphics and gesture component wherein during recording and playing back of the message the voice component of the message is carried by the telephone means and the graphics and gesture component is carried by the local area network, wherein during recording of the annotated message synchronisation marks for maintaining the synchronisation of the voice component and the graphics and gesture component of the message are recorded, and wherein during playing back the voice component played over the telephone means is continually synchronized with a display of graphics and gesture component of said message on said display, the synchronisation of the voice component and the graphics and gesture component being achieved by the protocol means using the recorded synchronisation marks.

9. A method of transferring dynamically annotated images comprising the steps of:
utilizing computer means comprising a computer screen;
connecting modem means to said computer means;
connecting telephone means to said modem means;
connecting a public telephone network to said modem means;
connecting PBX means to said public telephone network;
connecting a voice mail system to said PBX means; and
utilizing protocol means for recording and playing back an annotated message comprising at least an audio component and a graphics and gesture component wherein during recording and playing back of the message the voice component of the message is carried by the telephone means and the graphics and gesture component is carried by the modem means, wherein during recording of the annotated message synchronisation marks for maintaining the synchronisation of the voice component and the graphics and gesture component of the message are recorded, and wherein during playing back the voice component played over the telephone means is continually synchronized with a display of graphics and gesture component of said message on said display, the synchronisation of the voice component and the graphics and gesture component being achieved by the protocol means using the recorded synchronisation marks.

10. A method of transferring dynamically annotated images as claimed in claim 8 or 9 wherein utilizing said protocol means comprises the steps of:
recording said message; and
playing back said message.

11. A method of transferring dynamically annotated images as claimed in claim 10 wherein recording said message comprises the steps of:
loading said image on said computer screen;
asking said voice mail system to initiate a call to a device and to enter a waiting state; wherein said voice mail system initiates said call and upon answering of said call, plays a prompt indicating reason for said call and asks user to perform a specific action;
providing confirmation from said user;
initiating said voice mail system to instruct annotation program of said computer means to do annotation while said user begins recording a voice message through said telephone means; and
instructing said voice mail system to send images, gestures and synchronization markers to a message store to be stored with said voice message.

12. A method of transferring dynamically annotated images as claimed in claim 11 wherein playing back said message comprises the steps of:
loading said image on said computer screen;
asking said voice mail system to initiate a call to a device and to enter a waiting state; wherein said voice mail system initiates said call, plays a prompt indicating reason for said call and asks user to perform a specific action;
providing confirmation from said user;
sending said voice messages over said telephone means while said images and gestures are displayed on screen of said computer means; and
synchronizing with said synchronization markers, said telephone means and said screen of said computer means.

13. A method of transferring dynamically annotated images as claimed in claim 12 wherein playing back said messages further comprises the steps of:
initiating said computer means to request a list of messages from said voice mail system;
providing said list of messages from said voice mail system;
having said computer means select one or more messages from said list of messages; and
transmitting said one or more messages from said voice mail system.

## Patentansprüche

1. Telefongestütztes dynamisches Bildkommentiersystem, umfassend:
eine Computereinrichtung (24, 34), die eine Anzeige enthält und über ein Datennetz (26, 36) mit einer Nachrichtenablage (28, 38) verbunden ist;
eine Telefoneinrichtung (32, 42), die über ein Audionetz (30, 40) mit der Nachrichtenablage (28, 38) verbunden ist; und
eine Protokolleinrichtung zum Aufzeichnen und Wiedergeben einer kommentierten Nachricht, die mindestens eine Audiokomponente und eine Graphik- und Gestikkomponente enthält, wobei während des Aufzeichnens und Wiedergebens der Nachricht die Sprachkomponente der Nachricht vom Audionetz (30, 40) übertragen wird und die Graphik- und Gestikkomponente vom Datennetz (26, 36) übertragen wird, und wobei während des Aufzeichnens der kommentierten Nachricht Synchronisiermarkierungen zum Aufrechterhalten der Synchronisation der Sprachkomponente und der Graphik- und Gestikkomponente der Nachricht aufgezeichnet werden, und wobei während der Wiedergabe die Sprachkomponente, die über das Audionetz (30, 40) abgespielt wird, fortlaufend mit einer Darstellung der Graphik- und Gestikkomponente der Nachricht auf der Anzeige synchronisiert wird, und die Synchronisation der Sprachkomponente und der Graphik- und Gestikkomponente von der Protokolleinrichtung mit Hilfe der aufgezeichneten Synchronisiermarkierungen erreicht wird.

2. Telefongestütztes dynamisches Bildkommentiersystem, umfassend:
eine Computereinrichtung (24, 34), die einen Computerbildschirm enthält;
ein lokales Netz (26, 36), das mit der Computereinrichtung (24, 34) verbunden ist;
ein Sprachspeichersystem (28, 38), das mit dem lokalen Netz (26, 36) verbunden ist;
eine Telefon-Nebenstellenanlage (30, 40), die mit dem Sprachspeichersystem (28, 38) verbunden ist;
eine Telefoneinrichtung (32, 42), die mit der Nebenstellenanlage (30, 40) verbunden ist; und
eine Protokolleinrichtung zum Aufzeichnen und Wiedergeben einer kommentierten Nachricht, die mindestens eine Audiokomponente und eine Graphik- und Gestikkomponente enthält, wobei während des Auf zeichnens und Wiedergebens der Nachricht die Sprachkomponente der Nachricht von der Telefoneinrichtung (32, 42) übertragen wird, und die Graphik- und Gestikkomponente vom lokalen Netz (26, 36) übertragen wird, und wobei während des Aufzeichnens der kommentierten Nachricht Synchronisiermarkierungen zum Aufrechterhalten der Synchronisation der Sprachkomponente und der Graphik- und Gestikkomponente der Nachricht aufgezeichnet werden, und wobei während der Wiedergabe die Sprachkomponente, die über die Telefoneinrichtung (32, 42) abgespielt wird, fortlaufend mit einer Darstellung der Graphik- und Gestikkomponente der Nachricht auf der Anzeige synchronisiert wird, und die Synchronisation der Sprachkomponente und der Graphik- und Gestikkomponente von der Protokolleinrichtung mit Hilfe der aufgezeichneten Synchronisiermarkierungen erreicht wird.

3. Telefongestütztes dynamisches Bildkommentiersystem, umfassend:
eine Computereinrichtung (24, 34), die einen Computerbildschirm enthält;
eine Modemeinrichtung (19), die mit der Computereinrichtung (24, 34) verbunden ist;
eine Telefoneinrichtung (18), die mit der Modemeinrichtung (19) verbunden ist;
ein öffentliches Telefonnetz (20), das mit der Modemeinrichtung (19) verbunden ist;
eine Telefon-Nebenstellenanlage (16), die mit dem öffentlichen Telefonnetz (20) verbunden ist;
ein Sprachspeichersystem (15), das mit der Telefon-Nebenstellenanlage (16) verbunden ist; und
eine Protokolleinrichtung zum Aufzeichnen und Wiedergeben einer kommentierten Nachricht, die mindestens eine Audiokomponente und eine Graphik- und Gestikkomponente enthält, wobei während des Aufzeichnens und Wiedergebens der Nachricht die Sprachkomponente der Nachricht von der Telefoneinrichtung (18) übertragen wird, und die Graphik- und Gestikkomponente von der Modemeinrichtung (19) übertragen wird, und wobei während des Aufzeichnens der kommentierten Nachricht Synchronisiermarkierungen zum Aufrechterhalten der Synchronisation der Sprachkomponente und der Graphik- und Gestikkomponente der Nachricht aufgezeichnet werden, und wobei während der Wiedergabe die Sprachkomponente, die über die Telefoneinrichtung (18) abgespielt wird, fortlaufend mit einer Darstellung der Graphik- und Gestikkomponente der Nachricht auf der Anzeige synchronisiert wird, und die Synchronisation der Sprachkomponente und der Graphik- und Gestikkomponente von der Protokolleinrichtung mit Hilfe der aufgezeichneten Synchronisiermarkierungen erreicht wird.

4. Telefongestütztes dynamisches Bildkommentiersystem nach Anspruch 2 oder 3, worin die Protokolleinrichtung umfasst:
eine Aufzeichnungsvorrichtung; und
eine Wiedergabevorrichtung.

5. Telefongestütztes dynamisches Bildkommentiersystem nach Anspruch 4, worin die Aufzeichnungsvorrichtung umfasst:
eine Ladevorrichtung zum Laden des Bilds auf den Computerbildschirm;
eine Initiierungsvorrichtung, die das Sprachspeichersystem (15, 28, 38) auffordert, einen Anruf bei einer Einrichtung einzuleiten und in einen Wartestatus zu gehen, woraufhin das Sprachspeichersystem (15, 28, 38) den Anruf einleitet und nach der Beantwortung des Anrufs einen Bedienerführungstext darstellt, der den Grund für diesen Anruf angibt und den Benutzer auffordert, eine bestimmte Handlung vorzunehmen;
eine Bestätigungsvorrichtung, die eine Bestätigung durch den Benutzer liefert;
eine Anweisungsvorrichtung, die das Sprachspeichersystem (15, 28, 38) das Kommentierungsprogramm der Computereinrichtung anweisen lässt, die Kommentierung vorzunehmen, während der Benutzer mit dem Aufzeichnen einer Sprachnachricht über die Telefonvorrichtung beginnt; und
eine Kommunikationsvorrichtung, die das Sprachspeichersystem (15, 28, 38) Bilder, Gestiken und Synchronisiermarkierungen an eine Nachrichtenablage senden lässt, die in der Sprachnachricht gespeichert wird.

6. Telefongestütztes dynamisches Bildkommentiersystem nach Anspruch 4, worin die Wiedergabevorrichtung umfasst:
eine Ladevorrichtung zum Laden des Bilds auf den Computerbildschirm;
eine Initiierungsvorrichtung, die das Sprachspeichersystem auffordert, einen Anruf bei einer Einrichtung einzuleiten und in einen Wartestatus zu gehen, woraufhin das Sprachspeichersystem (15, 28, 38) den Anruf einleitet und nach der Beantwortung des Anrufs einen Bedienerführungstext darstellt, der den Grund für diesen Anruf angibt und den Benutzer auffordert, eine bestimmte Handlung vorzunehmen;
eine Bestätigungsvorrichtung, die eine Bestätigung durch den Benutzer liefert;
eine Übertragungsvorrichtung, die die Sprachnachrichten über die Telefonvorrichtung sendet, während die Bilder und Gestiken auf dem Bildschirm der Computereinrichtung dargestellt werden; und
eine Synchronisiervorrichtung, die die Synchronisiermarkierungen dazu verwendet, die Telefonvorrichtung und den Bildschirm der Computereinrichtung zu koordinieren.

7. Telefongestütztes dynamisches Bildkommentiersystem nach Anspruch 6, worin die Wiedergabevorrichtung zudem umfasst:
eine Nachrichtensuchvorrichtung für die Computereinrichtung (24, 34) zum Anfordern einer Nachrichtenliste vom Sprachspeichersystem (15, 28, 38);
eine Nachrichtenauflistvorrichtung für das Sprachspeichersystem (15, 28, 38), das eine Nachrichtenliste liefert;
eine Nachrichtenauswahlvorrichtung für die Computereinrichtung (24, 34) zum Auswählen einer oder mehrerer Nachrichten aus der Nachrichtenliste; und
eine Übertragungs- und Anzeigevorrichtung für das Sprachspeichersystem (15, 28, 38) zum Bereitstellen der Nachricht bzw. der Nachrichten.

8. Verfahren zum Übertragen dynamisch kommentierter Bilder, umfassend die Schritte:
das Verwenden einer Computereinrichtung, die einen Computerbildschirm enthält;
das Verbinden der Computereinrichtung mit einem lokalen Netz;
das Verbinden eines Sprachspeichersystems mit dem lokalen Netz;
das Verbinden einer Telefon-Nebenstellenanlage mit dem Sprachspeichersystem;
das Verbinden einer Telefonvorrichtung mit der Nebenstellenanlage; und
das Verwenden einer Protokolleinrichtung zum Aufzeichnen und Wiedergeben einer kommentierten Meldung, die mindestens eine Audiokomponente und eine Graphik- und Gestikkomponente enthält, wobei während des Aufzeichnens und Wiedergebens der Nachricht die Sprachkomponente der Nachricht von der Telefoneinrichtung übertragen wird, und die Graphik- und Gestikkomponente von dem lokalen Netz übertragen wird, und wobei während des Aufzeichnens der kommentierten Nachricht Synchronisiermarkierungen zum Aufrechterhalten der Synchronisation der Sprachkomponente und der Graphik- und Gestikkomponente der Nachricht aufgezeichnet werden, und wobei während der Wiedergabe die Sprachkomponente, die über die Telefoneinrichtung abgespielt wird, fortlaufend mit einer Darstellung der Graphik- und Gestikkomponente der Nachricht auf der Anzeige synchronisiert wird, und die Synchronisation der Sprachkomponente und der Graphik- und Gestikkomponente von der Protokolleinrichtung mit Hilfe der aufgezeichneten Synchronisiermarkierungen erreicht wird.

9. Verfahren zum Übertragen dynamisch kommentierter Bilder, umfassend die Schritte:
das Verwenden einer Computereinrichtung, die einen Computerbildschirm enthält;
das Verbinden einer Modemvorrichtung mit der Computereinrichtung;
das Verbinden einer Telefonvorrichtung mit der Modemvorrichtung;
das Verbinden eines öffentlichen Telefonnetzes mit der Modemvorrichtung;
das Verbinden einer Telefon-Nebenstellenanlage mit dem öffentlichen Telefonnetz;
das Verbinden eines Sprachspeichersystems mit der Nebenstellenanlage; und
das Verwenden einer Protokolleinrichtung zum Aufzeichnen und Wiedergeben einer kommentierten Meldung, die mindestens eine Audiokomponente und eine Graphik- und Gestikkomponente enthält, wobei während des Aufzeichnens und Wiedergebens der Nachricht die Sprachkomponente der Nachricht von der Telefoneinrichtung übertragen wird, und die Graphik- und Gestikkomponente von der Modemvorrichtung übertragen wird, und wobei während des Aufzeichnens der kommentierten Nachricht Synchronisiermarkierungen zum Aufrechterhalten der Synchronisation der Sprachkomponente und der Graphik- und Gestikkomponente der Nachricht aufgezeichnet werden, und wobei während der Wiedergabe die Sprachkomponente, die über die Telefoneinrichtung abgespielt wird, fortlaufend mit einer Darstellung der Graphik- und Gestikkomponente der Nachricht auf der Anzeige synchronisiert wird, und die Synchronisation der Sprachkomponente und der Graphik- und Gestikkomponente von der Protokolleinrichtung mit Hilfe der aufgezeichneten Synchronisiermarkierungen erreicht wird.

10. Verfahren zum Übertragen dynamisch kommentierter Bilder nach Anspruch 8 oder 9, worin der Gebrauch der Protokolleinrichtung die Schritte umfasst:
Aufzeichnen der Nachricht; und
Wiedergeben der Nachricht.

11. Verfahren zum Übertragen dynamisch kommentierter Bilder nach Anspruch 10, worin das Aufzeichnen der Nachricht die Schritte umfasst:
das Laden des Bilds auf den Computerbildschirm;
das Auffordern des Sprachspeichersystems, einen Anruf an eine Einrichtung einzuleiten und in einen Wartestatus zu gehen, woraufhin das Sprachspeichersystem den Anruf einleitet und nach der Beantwortung des Anrufs einen Bedienerführungstext darstellt, der den Grund für diesen Anruf angibt und den Benutzer auffordert, eine bestimmte Handlung vorzunehmen;
das Bereitstellen einer Bestätigung durch den Benutzer;
das Anstoßen des Sprachspeichersystems, damit es das Kommentierungsprogramm der Computereinrichtung anweist, die Kommentierung auszuführen, während der Benutzer mit der Aufzeichnung einer Sprachnachricht über die Telefonvorrichtung beginnt; und
das Anweisen des Sprachspeichersystems, Bilder, Gestiken und Synchronisiermarkierungen an eine Nachrichtenablage zu senden, die mit der Sprachnachricht gespeichert wird.

12. Verfahren zum Übertragen dynamisch kommentierter Bilder nach Anspruch 11, worin das Wiedergeben der Nachricht die Schritte umfasst:
das Laden des Bilds auf den Computerbildschirm;
das Auffordern des Sprachspeichersystems, einen Anruf an eine Einrichtung einzuleiten und in einen Wartestatus zu gehen, woraufhin das Sprachspeichersystem den Anruf einleitet, einen Bedienerführungstext darstellt, der den Grund für diesen Anruf angibt und den Benutzer auffordert, eine bestimmte Handlung vorzunehmen;
das Bereitstellen einer Bestätigung durch den Benutzer;
das Senden der Sprachnachrichten über die Telefonvorrichtung während die Bilder und Gestiken auf dem Bildschirm der Computereinrichtung dargestellt werden; und
das Synchronisieren der Telefonvorrichtung und des Bildschirms der Computereinrichtung mit den Synchronisiermarkierungen.

13. Verfahren zum Übertragen dynamisch kommentierter Bilder nach Anspruch 12, worin das Wiedergeben der Nachricht ferner die Schritte umfasst:
das Anstoßen der Computereinrichtung, damit sie eine Nachrichtenliste vom Sprachspeichersystem anfordert;
das Bereitstellen der Nachrichtenliste aus dem Sprachspeichersystem;
Veranlassen, dass die Computereinrichtung eine oder mehrere Nachrichten aus der Nachrichtenliste auswählt; und
das Übertragen der einen oder mehreren Nachrichten vom Sprachspeichersystem.

## Revendications

1. Un système d'annotation d'image dynamique au moyen de la téléphonie comprenant :
des moyens à ordinateur (24, 34), incluant un affichage, relié par un réseau de données (26, 36) à un organe de stockage message (28, 38) ;
des moyens à téléphone (32, 42) reliés par un réseau audio (30, 40) à l'organe de stockage message (28, 38) ; et
des moyens à protocole pour enregistrer et lire un message annoté comprenant au moins une composante audio et une composante graphique et gestuelle, où pendant l'enregistrement et la lecture du message, la composante vocale du message est transportée par le réseau audio (30, 40) et la composante graphique et gestuelle est transportée par le réseau de données (26, 36), où pendant l'enregistrement du message annoté, des marques de synchronisation permettant de maintenir la synchronisation de la composante vocale et de la composante graphique et gestuelle du message sont enregistrées, et où pendant la lecture, la composante vocale lue sur le réseau audio (30, 40) est continuellement synchronisée avec un affichage de la composante graphique et gestuelle dudit message sur ledit affichage, la synchronisation de la composante vocale et de la composante graphique et gestuelle étant obtenue par les moyens à protocole utilisant les marques de synchronisation enregistrées.

2. Un système d'annotation d'image dynamique au moyen de la téléphonie comprenant :
des moyens à ordinateur (24, 34) incluant un écran d'ordinateur ;
un réseau de zone locale (26, 36) relié auxdits moyens à ordinateur (24, 34) ;
un système de boîte vocale (28, 38) relié audit réseau de zone locale (26, 36) ;
des moyens à CSP (30, 40) reliés audit système de boîte vocale (28, 38) ;
des moyens à téléphone (32, 42) reliés auxdits moyens à CSP (30,40) ; et
des moyens à protocole pour enregistrer et lire un message annoté comprenant au moins une composante audio et une composante graphique et gestuelle, où pendant l'enregistrement et la lecture du message, la composante vocale du message est transportée par les moyens à téléphone (32, 42) et la composante graphique et gestuelle est transportée par le réseau de zone locale (26, 36), où pendant l'enregistrement du message annoté, des marques de synchronisation permettant de maintenir la synchronisation de la composante vocale et de la composante graphique et gestuelle du message sont enregistrées, et où pendant la lecture, la composante vocale lue sur les moyens à téléphone (32, 42) est continuellement synchronisée avec un affichage de la composante graphique et gestuelle dudit message sur ledit affichage, la synchronisation de la composante vocale et de la composante graphique et gestuelle étant obtenue par les moyens à protocole utilisant les marques de synchronisation enregistrées.

3. Un système d'annotation d'image dynamique au moyen de la téléphonie comprenant :
des moyens à ordinateur (24, 34) comprenant un écran d'ordinateur ;
des moyens à modem (19) reliés auxdits moyens à ordinateur (24, 34) ;
des moyens à téléphone (18) reliés auxdits moyens à modem (19) ;
un réseau de téléphone public (20) relié auxdits moyens à modem (19) ;
des moyens à CSP (16) reliés audit réseau de téléphone public (20) ;
un système de boîte vocale (15) relié auxdits moyens à CSP (16) ; et
des moyens à protocole pour enregistrer et lire un message annoté comprenant au moins une composante audio et une composante graphique et gestuelle, où pendant l'enregistrement et la lecture du message, la composante vocale du message est transportée par les moyens à téléphone (18) et la composante graphique et gestuelle est transportée par les moyens à modem (19), où pendant l'enregistrement du message annoté, des marques de synchronisation permettant de maintenir la synchronisation de la composante vocale et de la composante graphique et gestuelle sont enregistrées, et où pendant la lecture, la composante vocale lue sur les moyens à téléphone (18) est continuellement synchronisée avec un affichage de la composante graphique et gestuelle dudit message sur ledit affichage, la synchronisation de la composante vocale et de la composante graphique et gestuelle étant obtenue par les moyens à protocole utilisant les marques de synchronisation enregistrées.

4. Un système d'annotation d'image dynamique au moyen de la téléphonie tel que revendiqué à la revendication 2 ou 3, dans lequel lesdits moyens à protocole comprennent :
des moyens d'enregistrement ; et
des moyens de lecture.

5. Un système d'annotation d'image dynamique au moyen de la téléphonie tel que revendiqué à la revendication 4 dans lequel lesdits moyens d'enregistrement comprennent :
des moyens de chargement pour charger ladite image sur ledit écran d'ordinateur ;
des moyens d'initiation pour demander audit système de boîte vocale (15, 28, 38) d'initier un appel vers un dispositif et pour entrer un état d'attente ; où ledit système de boîte vocale (15, 28, 38) initie ledit appel et, lors de la réponse dudit appel, envoie un signal indiquant la raison pour ledit appel et demande à l'utilisateur d'effectuer une action spécifique ;
des moyens de confirmation pour fournir la confirmation de la part dudit utilisateur ;
des moyens d'instruction pour faire que ledit système de boîte vocale (15, 28, 38) donne au programme d'annotation desdits moyens à ordinateur l'instruction d'effectuer une annotation alors que ledit utilisateur commence l'enregistrement d'un message vocal par l'intermédiaire desdits moyens à téléphone ; et
des moyens de communication pour faire que ledit système de boîte vocale (15, 28, 38) envoie des images, des gestes et des marqueurs de synchronisation vers un organe de stockage de message dans lequel doit être stocké ledit message vocal.

6. Un système d'annotation d'image dynamique au moyen de la téléphonie tel que revendiqué à la revendication 4, dans lequel lesdits moyens de lecture comprennent :
des moyens de chargement pour charger ladite image sur ledit écran d'ordinateur ;
des moyens d'initiation pour demander audit système de boîte vocale d'initier un appel vers un dispositif et d'entrer un état d'attente ; où ledit système de boîte vocale (15, 28, 38) initie ledit appel et, lors de la réponse dudit appel, émet un signal indiquant la raison pour ledit appel et demande à l'utilisateur d'effectuer une action spécifique ;
des moyens de confirmation pour fournir une confirmation de la part dudit utilisateur ;
des moyens de transmission pour envoyer lesdits messages vocaux sur lesdits moyens à téléphone alors que lesdites images et lesdits gestes sont affichés sur l'écran desdits moyens à ordinateur ; et
des moyens de synchronisation pour utiliser lesdits marqueurs de synchronisation pour coordonner lesdits moyens à téléphone et ledit écran desdits moyens à ordinateur.

7. Un système d'annotation d'image dynamique au moyen de la téléphonie tel que revendiqué à la revendication 6, où lesdits moyens de lecture comprennent en outre :
des moyens de récupération de messages pour que lesdits moyens à ordinateur (24, 34) demandent une liste de messages en provenance dudit système de boîte vocal (15, 28, 38) ;
des moyens de liste de messages pour que ledit système de boîte vocale (15, 28, 38) fournisse ladite liste de messages ;
des moyens de sélection de messages pour que lesdits moyens à ordinateur (24, 34) sélectionnent un ou plusieurs messages issus de ladite liste de message ; et
des moyens de transmission et d'affichage pour que ledit système de boîte vocale (15, 28, 38) fournisse ledit un ou plusieurs messages.

8. Un procédé de transfert d'images annotées de manière dynamique comprenant les étapes consistant à :
utiliser des moyens à ordinateur comprenant un écran d'ordinateur ;
relier lesdits moyens à ordinateur à un réseau de zone locale ;
relier un système de boîte vocale audit réseau de zone locale ;
relier des moyens à CSP audit système de boîte vocale ;
relier des moyens à téléphone auxdits moyens à CSP ; et
utiliser des moyens à protocole pour enregistrer et lire un message annoté comprenant au moins une composante audio et une composante graphique et gestuelle, où pendant l'enregistrement et la lecture du message, la composante vocale du message est transportée par les moyens à téléphone et la composante graphique et gestuelle est transportée par le réseau de zone locale, où pendant l'enregistrement du message annoté, des marques de synchronisation permettant de maintenir la synchronisation de la composante vocale et de la composante graphique et gestuelle du message sont enregistrées, et où pendant la lecture, la composante vocale lue sur les moyens à téléphone est continuellement synchronisée avec un affichage de la composante graphique et gestuelle dudit message sur ledit affichage, la synchronisation de la composante vocale et de la composante graphique et gestuelle étant obtenue par les moyens à protocole utilisant les marques de synchronisation enregistrées.

9. Un procédé de transfert d'images annotées de manière dynamique comprenant les étapes consistant à :
utiliser des moyens à ordinateur comprenant un écran d'ordinateur ;
relier des moyens à modem auxdits moyens à ordinateur ;
relier des moyens à téléphone auxdits moyens à modem ;
relier un réseau de téléphone public auxdits moyens à modem ;
relier des moyens à CSP audit réseau de téléphone public ;
relier un système de boîte vocale auxdits moyens à CSP ; et
utiliser des moyens à protocole pour enregistrer et lire un message annoté comprenant au moins une composante audio et une composante graphique et gestuelle, où pendant l'enregistrement et la lecture du message, la composante vocale du message est transportée par les moyens à téléphone et la composante graphique et gestuelle est transportée par les moyens à modem, où pendant l'enregistrement du message annoté, des marques de synchronisation permettant de maintenir la synchronisation de la composante vocale et de la composante graphique et gestuelle du message sont enregistrées, et où pendant la lecture, la composante vocale lue sur les moyens à téléphone est continuellement synchronisée avec un affichage de la composante graphique et gestuelle dudit message sur ledit affichage, la synchronisation de la composante vocale et de la composante graphique et gestuelle étant obtenue par les moyens à protocole utilisant les marques de synchronisation enregistrées.

10. Un procédé de transfert d'images annotées de manière dynamique tel que revendiqué à la revendication 8 ou 9, dans lequel l'utilisation desdits moyens à protocole comprend les étapes consistant à :
enregistrer ledit message ; et
lire ledit message.

11. Un procédé de transfert d'images annotées de manière dynamique tel que revendiqué à la revendication 10, dans lequel l'enregistrement dudit message comprend les étapes consistant à :
charger ladite image sur ledit écran d'ordinateur ;
demander audit système de boîte vocale d'initier un appel vers un dispositif et d'entrer un état d'attente ; où ledit système de boîte vocale initie ledit appel et, lors de la réponse audit appel, émet un signal indiquant la raison pour ledit appel et demande à l'utilisateur d'effectuer une action spécifique ;
fournir une confirmation de la part dudit utilisateur ;
initier ledit système de boîte vocale pour donner au programme d'annotation desdits moyens à ordinateur l'instruction d'effectuer une annotation alors que ledit utilisateur commence à enregistrer un message vocal par l'intermédiaire desdits moyens à téléphone ; et
donner audit système de boîte vocale l'instruction d'envoyer des images, des gestes et des marqueurs de synchronisation vers un organe de stockage de message dans lequel doit être stocké ledit message vocal.

12. Un procédé de transfert d'images annotées de manière dynamique tel que revendiqué à la revendication 11, dans lequel la lecture dudit message comprend les étapes consistant à :
charger ladite image sur ledit écran d'ordinateur ;
demander audit système de boîte vocale d'initier un appel vers un dispositif et d'entrer un état d'attente ; où ledit système de boîte vocale initie ledit appel, émet un message indiquant la raison pour ledit appel et demande à l'utilisateur d'effectuer une action spécifique ;
fournir une confirmation de la part dudit utilisateur ;
envoyer lesdits messages vocaux sur lesdits moyens à téléphone alors que lesdites images et lesdits gestes sont affichés sur l'écran desdits moyens à ordinateur ; et
synchroniser avec lesdits marqueurs de synchronisation, lesdits moyens à téléphone et ledit écran desdits moyens à ordinateur.

13. Un procédé de transfert d'images annotées de manière dynamique tel que revendiqué à la revendication 12, dans lequel la lecture desdits messages comprend en outre les étapes consistant à :
initier lesdits moyens à ordinateur pour demander une liste de messages issus dudit système de boîte vocale ;
fournir ladite liste de messages issus dudit système de boîte vocale ;
faire que lesdits moyens à ordinateur sélectionnent un ou plusieurs messages issus de ladite liste de messages ; et
transmettre ledit un ou plusieurs messages issus dudit système de boîte vocale.
